# EUROPEAN PATENT APPLICATION

(11) **EP 1 767 258 A1**
(43) Date of publication of application: **28.03.2007**
(21) Application number: 05077172.4
(22) Date of filing: 22.09.2005
(51) Int. Cl.: B01D 29/72, B01D 29/66, B01D 33/54, B01D 33/68, B01D 33/03, B01D 35/20, B01D 65/08

(54) **Filter with vibrating filter element**

(71) Applicant: UNIVERSITEIT TWENTE, 7522 NB Enschede (NL)
(72) Inventor: Girones, Miriam, 7534 JD Enschede (NL); Wessling, Mathias, 7531 EK Enschede (NL); Lammerink, Rob G. H., 7559 WD Hengelo (OV) (NL)
(74) Representative: 't Jong, Bastiaan Jacob

(57) **Abstract**

The invention relates to a device for filtering a fluid, which device comprises:
- a feed channel (3) for passing a fluid;
- a permeate outlet channel (5) branching off the feed channel; and
- a filter (6) arranged in the permeate outlet channel for filtering the fluid,
wherein
- the filter is flexible and
- the device comprises vibrating means for vibrating the flexible filter.

## Description

The invention relates to a device for filtering a fluid, which device comprises:
- a feed channel for passing a fluid;
- a permeate outlet channel branching off the feed channel; and
- a filter arranged in the permeate outlet channel for filtering the fluid.

Such devices are generally known and are used for filtering fluids such as milk, beer, blood or water. With this filtering technique bacteria can be filtered out from the fluid providing a liquid without any harmful constituents, which could impair the storage life of the liquid. For example with milk, sterilization was used to increase the shelf life. However this sterilization discreases the taste of the milk, which makes sterilized milk a less attractive product. Now with this technique of using filters it is possible to maintain the taste of the milk and increase the shelf life thereof.

A filter specifically suitable for filtration of fluids is for example known from NL-A-1024292. This device uses a filter element, which is made of a silicium nitrate filter, which is build in a clean room similar to semiconductor products. The filter element is placed in a permeate outlet channel branching off a recirculation channel. The fluid is recirculated through the recirculation channel and part of the fluid flows through the silicium nitrate filter element into the permeate outlet channel. The disadvantage of such a device is that the filter elements tend to clog up quickly. This reduces the efficiency of the filtering device. Another disadvantage of this device is the use of silicium nitrate elements, which have to be made in a clean room. This increases the costs of the filtering element.

The disadvantage of clogging of the filter element is solved by providing a back flow: part of the already filtered fluid is pumped back through the filter elements into the feed flow. This is also often called flow reversal. This results in a decrease in the efficiency of the filter element, because part of the already filtered fluid is lost in the mainstream. It does however solve the clogging of the filter element, as the back flow of fluids carries along the constituents, which clog up the filter.

The other drawback of the known device, the high costs of the filter can be alleviated to use a polymer filter element, as described by WO-A-02/43937. This document describes a method for producing in an efficient way a filter element which can be used in the device as described above. The combination of these documents has still the disadvantage that part of the already filtered fluid is lost during the back flush of the filter element.

It is now an object of the invention to provide a device, which alleviates most or all of the above-mentioned disadvantages.

This object is achieved by a device according to the invention, which is characterized in that the filter is flexible and the device comprises vibrating means for vibrating the flexible filter.

It turns out that only vibrating of the flexible filter is sufficient to prevent clogging up of the filter. It is suspected that by vibrating the filter, the constituents are kept flowing above the filter, such that they can be dragged along with the main flow in the feed channel. Due to the vibrating of the filter, the filter will at least maintain its permeability for a substantial longer time than with the prior art.

Preferably the filter is a microsieve. In particular these type of applications vibrating of the filter provides a robust filter device, which can filter large quantities of fluid without substantial decrease of the permeability. This does however not exclude the use of other filters for the device according to the invention.

Preferably the microsieve has pores smaller than 10 micron. The filter could be made from a polymer, like for example explained in WO-A-02/43937.

In an embodiment of the device according to the invention the vibrating means comprise an actuator attached to the flexible filter. This actuator will move the filter element, such that it will be vibrated and causes removal of any constituents, which could clog up the filter. The actuator can for example be a piezo-electric element. This could fairly easily cause the filter to vibrate.

In another preferred embodiment of the device according to the invention, the vibrating means comprise pump means for providing a counter flow in the permeate outlet channel, in order to vibrate the flexible filter. By providing a counter flow in the permeate outlet channel, a pressure is build up, which will push back the filter element causing it to move to a other position by removing the counter flow, the original flow in the permeate outlet channel will be re-established bringing the filter back into its original position. It is also possible to provide a volume displacement in the permeate channel, which results in movement of the filter towards the other position. If the pump means provide a pulsated counter flow or pressure, the filter element will be cleaned at a regular interval. It is with a counter flow not necessary and even unwanted to have back flush. It is only necessary to provide with the counter flow a movement of the filter. It is not necessary that fluid, which is already filtered, is pushed back through the filter into the recirculation flow.

Another option to vibrate the filter is to pass air bubbles through the feed channel. These air bubbles will provide pressure fluctuations, which cause the filter to move.

The invention further relates to a method for filtering a fluid, which method comprises the steps of:
- passing a fluid along a flexible filter surface, such that part of the fluid flows through the flexible filter into a permeate outlet channel;
- moving at least part of the flexible filter between two outer positions in order to remove any deposition on the filter surface.

By moving the flexible filter the fluid in the feed channel, which is situated above the flexible filter, will be pushed back by the movement of the filter such that any constituents present in the fluid can be taken along with the feed flow. Also constituents already present on the surface of the filter will be pushed away and again be flowting in the recirculation flow.

In a preferred embodiment the flexible filter is moved between a convex position and a flat or concave position. This can be obtained by keeping the filter secured on all sides and providing a force onto the surface of the filter. This will make the filter to become convex or concave.

In yet another preferred embodiment of the method according to the invention, the method comprises the step of providing a counter flow in the permeate outlet channel to move the flexible filter between the outer positions. Preferably the counter flow is controlled such that substantially no flow reversal of the flexible filter occurs. It will only result in a vibrating of the filter causing it to be kept substantially clean.

It is furthermore preferred if the counter flow is pulsed. A pulsated counter flow will not much influence the flow in the permeate outlet channel, which has advantages for further processing the permeate flow.

These and other advantages of the invention will be further elucidated in conjunction with the accompanying drawings.

Figure 1 shows an embodiment of a device according to the invention.

Figure 2A-2C show cross-sectional views in which the filter is vibrated.

Figure 3 shows a schematic cross-sectional view of a second embodiment of the device according to the invention.

Figure 4 shows a schematic cross-sectional view of a third embodiment of a device according to the invention.

Figure 5 shows a diagram with measurements of a filtering device according to the prior art.

Figure 6 shows a diagram of measurements for a device according to the invention.

Figure 7 shows a schematic cross-sectional view of a fourth embodiment of a device according to the invention.

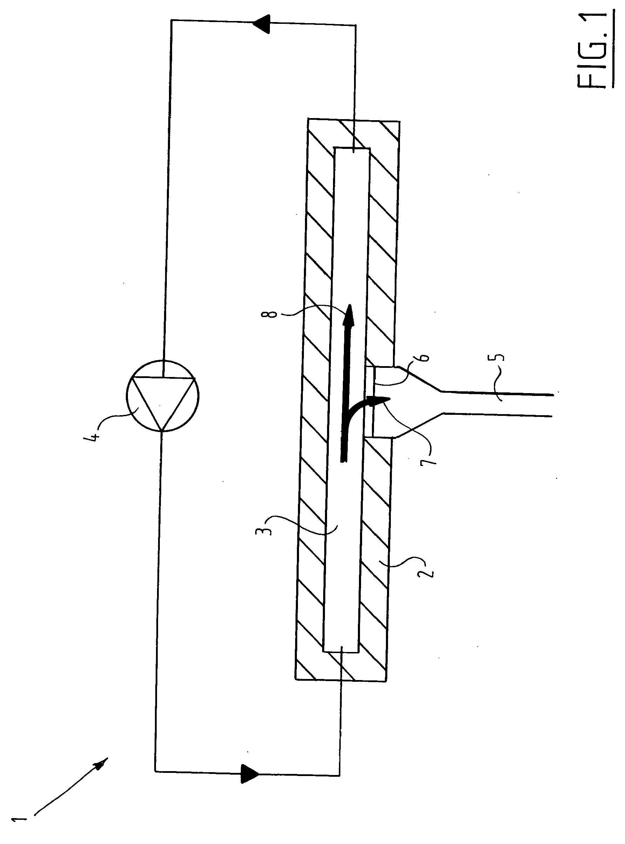

Figure 1 shows in partly cross-sectional view and partly schematic view a filtering device 1 according to the invention. The device 1 has a housing 2, which constitutes a feed channel 3. Fluid is pumped by pump 4 through this feed channel 3. In the wall of the chamber 2 an opening is provided, which connects to a permeate outlet channel 5, branching of the recirculation channel 3. In the opening a microsieve 6 is arranged. When fluid is recirculated by pump 4 part of the fluids flows through the filter 6 and is designated as permeate 7. The remaining flow 8 of the fluid is pumped out of the housing 2 and recirculated again over the filter 6.

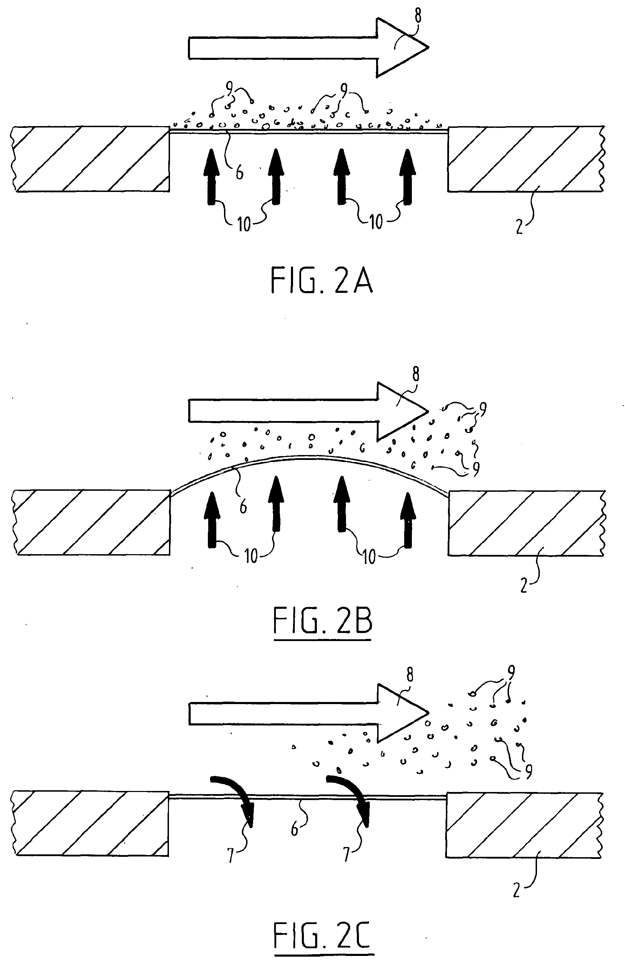

In figures 2A-2C the fibrating of the filter 6 is explained.

In use constituents 9 tend to clog up the filter 6 as permeate flows through the filter 6 and the constituents 9 are kept behind. In order to keep the filter 6 clean a counter pressure or force 10 is provided on the filter 6 (figure 2A). Due to this force 10 the flexible filter 6 moves up and gets a convex shape. By this movement of the filter 6, the constituents 9 are also moved up into the recirculation flow 8 (see figure 2B).

Now when the pressure force 10 is removed the filter element 6 will get back to its original position, amongst others by the permeate flow 7. The constituents 9, which were lifted up by the filter 6 remain flowing in the recirculation flow 8 and will be carried along with this recirculation flow 8 and leaving the filter 6 clean.

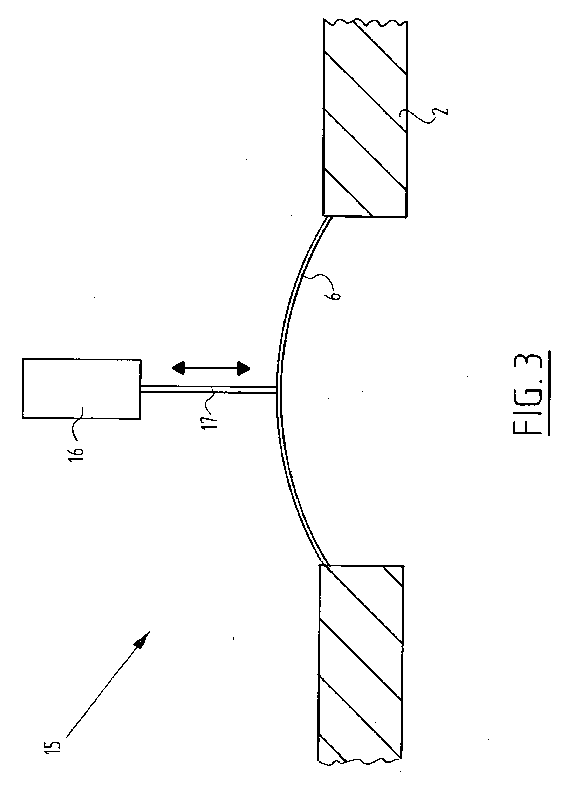

Figure 3 shows a second embodiment of a device 15 according to the invention. This device has a number of features in common with the device 1. Again an opening is provided in the housing 2 in which a filter 6 is arranged. In order to be able to move the filter 6 between two positions an actuator 16 is provided, which is attached by a rod 17 to the surface of the filter 6. By his actuator 16 the filter 6 can be actively displaced in order to have the constituents flowing above the filter 6 and have them carried along by the recirculation current.

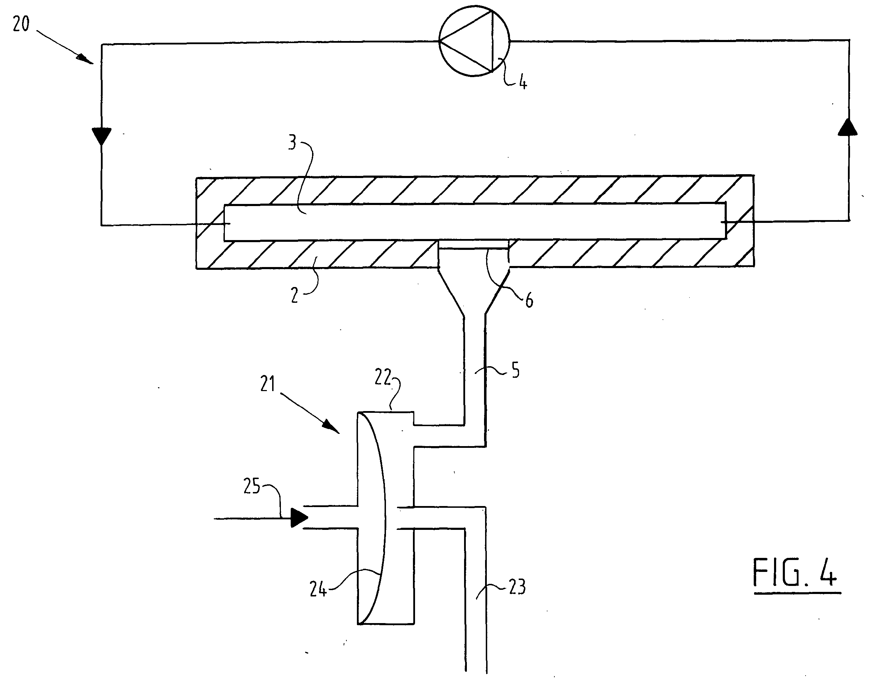

Figure 4 shows a third embodiment of a device 20 according to the invention. Also this device has a number of features in common with the device 1 according to the invention. In this embodiment a pulsating device 21 is arranged in the permeate outlet channel 5. This pulsating device has a housing 22 in which the permeate outlet channel 5 discharges and a discharged channel 23. In the housing a fluid tight membrane 24 is arranged, which can be operated by a pressurized airflow 25. This device is described in for example NL-A-1024292 and can provide a counter flow in the permeate outlet channel 5. In order to achieve this pressurized air 25 is arranged on the membrane 24, which will first close off the discharge channel 23 such that the remaining pressure will result in a counter flow in the permeate outlet channel 5.

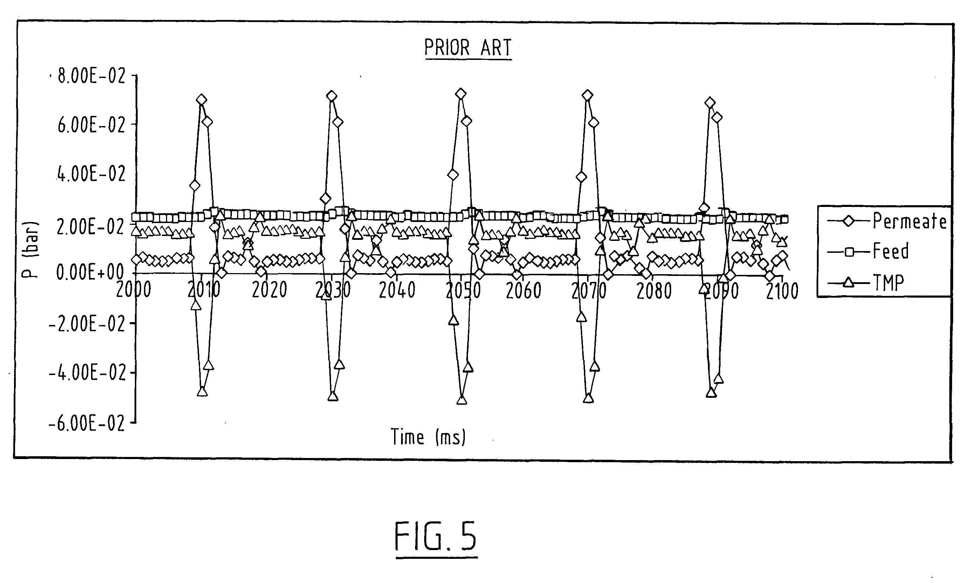

Experiments have been performed in order to determine wether only the movement of the filter already results in the advantages of the invention. The experiments were performed with a device similar according to figure 4 and in which first a silicium nitrate filter was arranged and afterwards a flexible polymer filter. The silicium nitrate filter is a rigid filter, which cannot be flexed and which will not vibrate. The filter used in the experiments had pores of 2 micron. A counter flow was arranged in the permeate outlet channel 5 of the device according to figure 4. The pulses of this counter flow had a with of 20 m/s and a frequency of 3.3 Hz. The results of the measurements are shown in figure 5. The pressure just above the filter 6 in the recirculation channel 3 is shown by square measuring points. It is clear that the pressure remains constant and is not influenced by the counter flow in the permeate outlet channel 5. The pressure in the permeate outlet channel is depicted by diamond shaped measuring points. From figure 5 it is clear that at a regular interval pulses are arranged in the permeate outlet channel. As the pressure difference between the permeate flow and the recirculation flow is inverse during a pulse it is clear that at least some flow reversal will occur in which already filtered fluid will be pushed back through the filter 6. With this device it was observed that after some time (please insert some data) the permeability of the filter was still decreased to about (to be filled in) %.

The second experiment was performed with a flexible polymer microsieve having pores of 2 micron. The pulse width and frequency of the counter flow in the permeate outlet channel was kept the same.

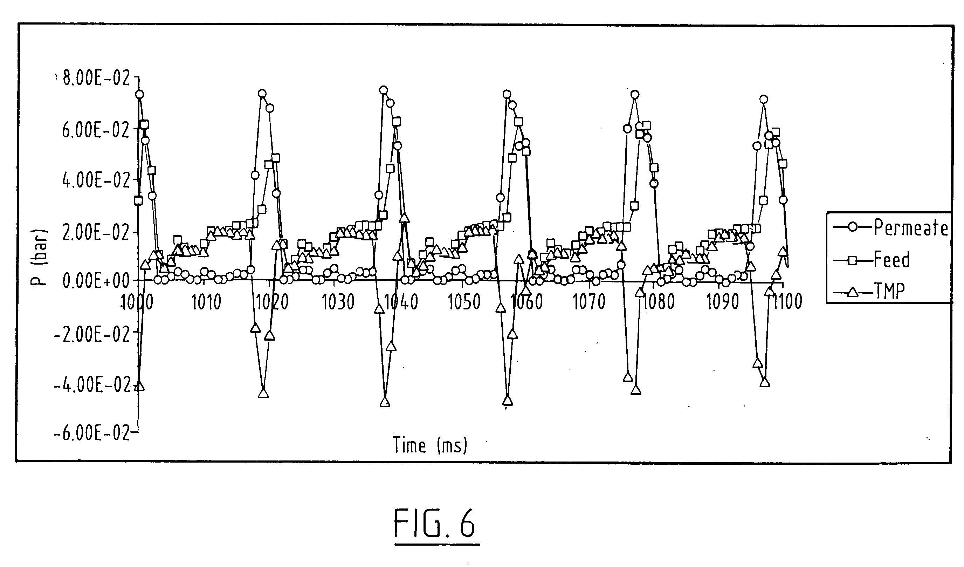

From figure 6 it is clear that the pressure in the permeate outlet channel (depicted by round measuring points) is followed by the pressure in the recirculation (depicted by square measuring points). There is no substantial pressure difference between both flows, so no substantial flow reversal will occur with a flexible polymer microsieve. The slight shift in measurements are the result of the inertia of the fluid. With the flexible polymer microsieve it was observed that still after (to be filled in) the permeability of the filter was still above the (to be filled in) %.

Thus, it can be concluded that only by moving the flexible filter up and down a substantial reduction of constituents clogging up the filter is achieved. The further advantage is that no flow reversal will occur such that the efficiency of this device with the flexible microsieve is increased in comparison to a filter device according to the

### prior art.

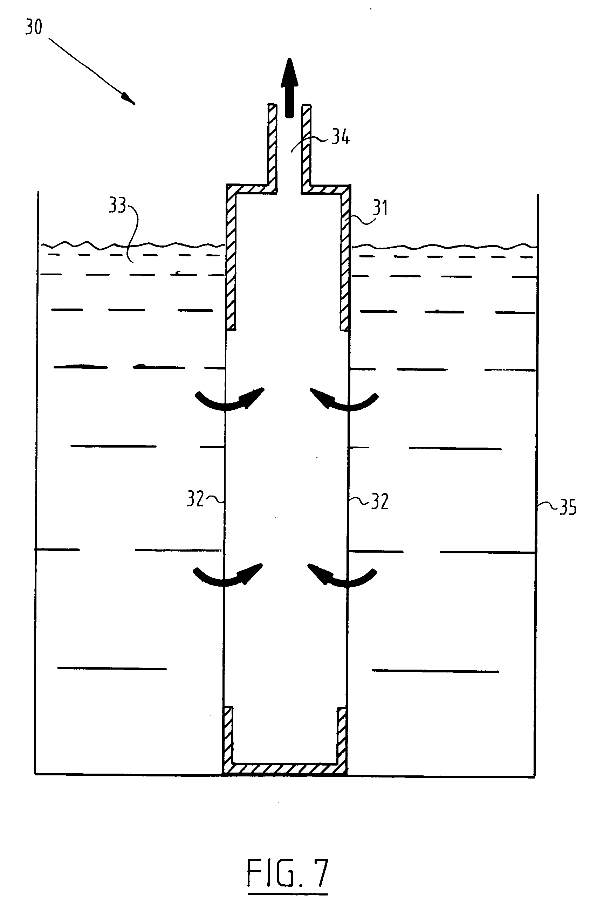

Figure 7 shows a schematic cross-sectional view of a fourth embodiment 30 of a device according to the invention. The device 30 has a housing 31 in which two microsieves 32 are arranged. The housing 31 is submerged into the fluid 33 to be filtered. A sufficient under pressure is arranged on the outlet opening 34, which has the result that the fluid to be filtered permeates through the microsieves 32. Any irregularities, which are stopped by the microsieves 32 will fall off the microsieves to the bottom of the container 35 as soon as the microsieves 32 are vibrated.

## Claims

1. Device for filtering a fluid, which device comprises:
- a feed channel for passing a fluid;
- a permeate outlet channel branching off the feed channel; and
- a filter arranged in the permeate outlet channel for filtering the fluid,
**characterized in that**
- the filter is flexible and
- the device comprises vibrating means for vibrating the flexible filter.

2. Device according to claim 1, wherein the filter is a microsieve.

3. Device according to claim 2, wherein the microsieve has pores smaller than 10 micron.

4. Device according to claim 2 or 3, wherein the filter is made from a polymer.

5. Device according to any of the preceding claims, wherein the vibrating means comprise an actuator attached to the flexible filter.

6. Device according to claim 5, wherein the actuator is a piezo-electric element.

7. Device according to any of the preceding claims, wherein the vibrating means comprise pump means for providing a counter flow in the permeate outlet channel, in order to vibrate the flexible filter.

8. Device according to claim 7, wherein the pump means provide a pulsated counter flow.

9. Method for filtering a fluid, which method comprises the steps of:
- passing a fluid along a flexible filter surface, such that part of the fluid flows through the flexible filter into a permeate outlet channel;
- moving at least part of the flexible filter between two outer positions in order to remove any deposition on the filter surface.

10. Method according to claim 9, wherein the flexible filter is moved between a convex position and a flat or concave position.

11. Method according to claim 9 or 10, comprising the step of providing a counter flow in the permeate outlet channel to move the flexible filter between the two outer positions.

12. Method according to claim 11, wherein the counter flow is controlled such that substantially no back flush of the flexible filter occurs.

13. Method according to claim 11 or 12, wherein the counter flow is pulsed.
